# FASCICULE DE BREVET EUROPEEN

(11) **EP 2 168 807 B1**
(45) Date de publication et mention de la délivrance du brevet: **04.09.2013**
(21) Numéro de dépôt: 09170423.9
(22) Date de dépôt: 16.09.2009
(51) Int. Cl.: B60K 37/06

(54) **Molette de commande avec indicateurs lumineux**
Drehschalter mit Leucht-Indikatoren
Rotary wheel with light indicators

(30) Priorité: 30.09.2008 FR 0856599
(43) Date de publication de la demande: 31.03.2010
(73) Titulaire: Peugeot Citroën Automobiles SA, 78140 Vélizy-Villacoublay (FR)
(72) Inventeur: Berger, Henri, 78114 Magny les Hameaux (FR)
(74) Mandataire: Vigand, Régis Louis Michel

(56) Documents cités:
- EP-A- 1 580 058
- DE-A1- 19 735 316
- DE-A1-102004 031 659

## Description

La présente invention concerne de manière générale une molette de commande pour véhicule automobile comprenant une première partie fixe sur laquelle sont disposées des indicateurs de fonction en correspondance desquels sont prévus des indicateurs lumineux et une deuxième partie rotative par rapport à la première partie pour commander l'activation desdites fonctions. Plus particulièrement, l'invention concerne une molette de commande pour véhicule automobile hybride.

Il est connu dans l'art antérieur, notamment du document EP 0 814 965, un appareil de commande pour système automatique de climatisation pour véhicule. Cet appareil de commande comprend notamment un bouton tournant comprenant une indication visuelle pour régler une valeur de consigne d'une fonction de climatisation. Des moyens d'indication lumineux sont prévus pour indiquer la valeur de consigne réglée. Un tel appareil de commande ne permet pas d'indiquer à l'utilisateur, d'une part, l'état (actif / inactif) des différentes fonctions commandées et, d'autre part, la disponibilité ou l'indisponibilité des fonctions commandées. En outre, l'utilisation d'un bouton tournant sur lesquels est agencé un indicateur n'est en général pas très esthétique.

Un but de la présente invention est de répondre aux différents inconvénients de l'art antérieur mentionnés ci-dessus et en particulier, tout d'abord, de fournir une molette de commande permettant de clairement indiquer à l'utilisateur l'état de chacune des fonctions commandées par la molette tout en préservant un design attractif.

Pour cela un premier aspect de l'invention concerne une molette de commande pour véhicule automobile comprenant une première partie fixe sur laquelle sont disposées des indicateurs de fonction en correspondance desquels sont prévus au moins autant d'indicateurs lumineux et une deuxième partie sans indicateur mobile par rapport à la première partie pour commander l'activation desdites fonctions, **caractérisée en ce que** chacun des indicateurs lumineux comprend un premier état indiquant que la fonction correspondante est activée, un deuxième état indiquant que la fonction correspondante est désactivée et disponible, et un troisième état indiquant que la fonction correspondante est désactivée et indisponible. Une telle molette permet bien d'indiquer la fonction active et les fonctions inactives tout en indiquant pour ces dernières si elles sont disponibles ou non. En outre, un tel système d'indicateur lumineux à trois états permet de s'affranchir de l'utilisation d'un indicateur sur la partie mobile de la molette rendant ainsi l'ensemble plus esthétique.

Selon une variante de réalisation avantageuse, la deuxième partie est mobile en rotation par rapport à la première partie.

Selon une autre variante de réalisation avantageuse, dans un premier mode de fonctionnement dit « manuel », l'indication de disponibilité fournie par le deuxième état indique que la fonction correspondante est possible, et l'indication de disponibilité fournie par le troisième état indique que la fonction correspondante est impossible. Dans un deuxième mode de fonctionnement dit « assisté », l'indication de disponibilité fournie par le deuxième état indique que la fonction correspondante est conseillée et possible, et l'indication de disponibilité fournie par le troisième état indique que la fonction correspondante est déconseillée ou impossible.

Selon une autre variante de réalisation avantageuse, le premier état est indiqué au moyen d'une première couleur, le deuxième état au moyen d'une deuxième couleur et le troisième état par l'absence d'illumination ou l'utilisation d'une troisième couleur de l'indicateur lumineux correspondant.

Selon une autre variante de réalisation avantageuse, la première partie fixe est formée par un disque central, et la deuxième partie rotative est formée par un anneau concentrique au disque central.

Selon une autre variante de réalisation avantageuse pour un véhicule automobile hybride comprenant un moteur électrique et un moteur thermique, au moins deux indicateurs de fonction sont prévus sur la partie fixe de la molette, un premier indicateur désignant un mode automatique dans lequel le véhicule gère automatiquement l'utilisation de l'un et/ou de l'autre des moteurs et un deuxième indicateur désignant un mode d'émission zéro dans lequel le véhicule utilise uniquement le moteur électrique. Avantageusement, quatre indicateurs de fonction sont prévus sur la partie fixe de la molette, un troisième indicateur désignant un mode sport dans lequel les deux moteurs sont utilisés de manière à fournir plus de couple pour déplacer le véhicule et un quatrième indicateur désignant un mode quatre roues motrices dans lequel deux roues sont emmenées par le moteur thermique et les deux autres roues sont emmenées par le moniteur électrique.

Selon un deuxième aspect, l'invention concerne un procédé d'actionnement d'une molette de commande selon le premier aspect de l'invention, **caractérisé en ce que** l'indicateur lumineux de la fonction active est dans le premier état, les indicateurs lumineux des fonctions désactivées sont dans le deuxième état pour les fonctions disponibles et dans le troisième état pour les fonctions indisponibles.

D'autres caractéristiques et avantages de la présente invention apparaîtront plus clairement à la lecture de la description détaillée qui suit de modes de réalisation de l'invention donnés à titre d'exemples nullement limitatifs et illustrés par le dessin annexé, dans lesquels :
- les figures 1a et 1b représentent une molette de commande selon un premier mode de réalisation de la présente invention ;
- la figure 2 représente une molette de commande selon une variante du premier mode de réalisation ;
- la figure 3 représente une molette de commande selon un deuxième mode de réalisation.

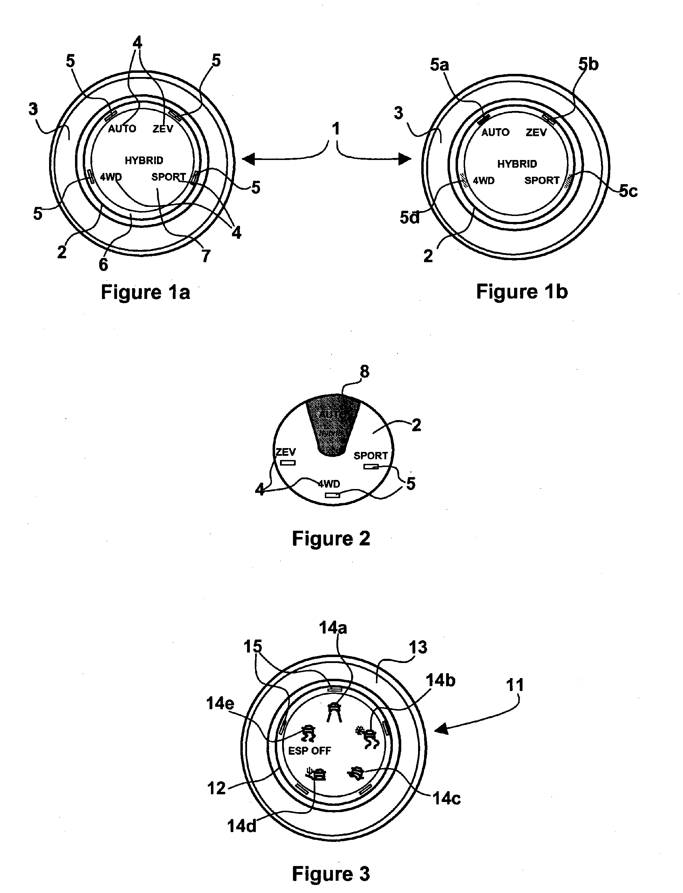

L'invention sera décrite ci-après uniquement à titre d'exemple non limitatif en relation avec les figures 1a à 3.

La figure 1a représente une molette de commande selon un premier mode de réalisation de la présente invention. La molette 1 comprend une première partie fixe 2, située de préférence au centre et en forme de disque, sur laquelle sont disposées des indicateurs de fonction 4 en correspondance desquels sont agencés des indicateurs lumineux 5. Le premier mode de réalisation, représenté ici, concerne une molette de commande pour un véhicule automobile de type hybride, c'est-à-dire comprenant un premier moteur électrique et un deuxième moteur thermique. À titre d'exemple, les fonctions commandées par cette molette 1 peuvent être les quatre modes de fonctionnement énumérés ci-après :
-- un mode « AUTO », sélectionné par défaut au démarrage, dans lequel la sélection entre le moteur électrique et le moteur thermique ou les deux est géré automatiquement par le véhicule ;
-- un mode « SPORT » utilisant les deux moteurs électrique et thermique, et dans lequel le passage des rapports est plus court, un couple plus important étant délivré au moyen du moteur électrique ;
-- un mode « 4WD » dans lequel sont utilisées les quatre roues motrices, deux roues étant emmenées par le moteur thermique, les deux autres roues étant emmenées par le moteur électrique.
-- un mode «ZEV» (pour Zero Emission Vehicle), dans lequel uniquement le moteur électrique est utilisé.

Selon une première variante de réalisation (figures 1a et 1b), les indicateurs lumineux 5 sont agencés sur un anneau fixe 6, concentrique au disque central 7 également fixe, formant l'ensemble central 2. Selon une deuxième variante de réalisation (figure 2), les indicateurs lumineux sont agencés en dessous des indicateurs de fonction, tous les indicateurs étant situés dans le disque central fixe.

Se référant de nouveau à la figure 1a, la molette 1 comprend une deuxième partie 3 mobile, avantageusement sous la forme d'une bague ou d'un anneau rotatif concentrique par rapport à la première partie fixe 2. On notera que de préférence aucune indication n'est prévue sur cet anneau rotatif, de sorte à améliorer le design général de la molette 1. La deuxième partie 3 rotative permet de commander l'activation des fonctions indiquées sur la partie intérieure 2 fixe. Pour cela, l'utilisateur doit tout simplement faire tourner la partie extérieure 3 en regard de l'indication de fonction qu'il désire activer.

Considérant maintenant la figure 1b, sur laquelle est représentée une molette identique à celle de la figure 1a, l'originalité réside dans les indicateurs lumineux utilisés. Les références numériques utilisées sont les mêmes que celles de la figure 1a. Sur l'exemple représenté à la figure 1b, le mode « AUTO » est activé, les autres modes étant désactivés. Pour indiquer clairement à l'utilisateur dans quel mode le véhicule fonctionne, l'indicateur lumineux 5a correspondant au mode « AUTO » est dans un premier état, par exemple allumé dans une première couleur. À partir du mode courant, ici le mode « AUTO », il arrive qu'un ou plusieurs des autres modes possibles ne soient pas disponibles, tandis que les modes restants le sont. Pour permettre à l'utilisateur de distinguer un mode désactivé disponible d'un mode désactivé indisponible, il est avantageusement prévu que chaque indicateur lumineux 5 présente en sus du premier état, i.e. mode actif indiqué par l'allumage dans une première couleur, un deuxième état indiquant que le mode correspondant est désactivé et disponible et un troisième état indiquant que le mode correspondant est désactivé et indisponible. De préférence le deuxième état est réalisé par l'allumage de l'indicateur lumineux dans une deuxième couleur, tandis que le troisième état est réalisé soit par l'absence d'allumage de l'indicateur lumineux, soit par l'allumage de cet indicateur dans une troisième couleur. Un tel indicateur lumineux est obtenu par exemple en utilisant deux diodes électroluminescentes de couleurs différentes, ou trois selon les effets de couleurs souhaités. Une diode de couleur verte pourra signifier que le mode est actif tandis qu'une diode de couleur orange pourra signifier que le mode est inactif mais disponible. Ainsi sur l'exemple représenté à la figure 1b, le mode «ZEV» est désactivé et indisponible, l'indicateur lumineux 5b étant éteint, et les modes «4WD» et «SPORT» sont désactivés et disponibles, les indicateurs lumineux 5c et 5d étant allumés dans une deuxième couleur, différente de celle de l'indicateur 5a.

Selon une variante de réalisation, il est prévu un bouton de commande, non représenté, permettant à l'utilisateur de basculer entre un mode de fonctionnement manuel et un mode de fonctionnement assisté. Dans le premier mode de fonctionnement manuel, l'indication de disponibilité fournie par le deuxième état indique que la fonction correspondante est possible, et l'indication de disponibilité fournie par le troisième état indique que la fonction correspondante est impossible. Un tel mode de fonctionnement manuel permet à l'utilisateur de forcer un mode déconseillé s'il n'est pas impossible. Dans le deuxième mode de fonctionnement assisté, l'indication de disponibilité fournie par le deuxième état indique que la fonction correspondante est conseillée et possible, et l'indication de disponibilité fournie par le troisième état indique que la fonction correspondante est déconseillée ou impossible.

La figure 2 représente la partie centrale fixe 2 d'une molette de commande selon une variante de réalisation du premier mode. Dans cette variante, les indicateurs lumineux 5 sont agencés directement sur le disque central 7, à l'exception de l'indicateur lumineux pour le mode «AUTO» qui est réalisé sous la forme d'un puits de lumière 8, qui est allumé dans une première couleur lorsque le mode est actif et dont une deuxième couleur lorsque le mode est inactif et disponible.

La figure 3 représente une molette de commande selon un deuxième mode de réalisation. La molette 11 représentée sur cette figure correspond à une molette de gestion du système d'antipatinage du véhicule. Les éléments formant la molette 11 restent identiques à ceux de la molette présentée en liaison avec les figures 1a et 1b, hormis les fonctions qu'elle commande. Dans cet exemple, il existe cinq modes de fonctionnement listés ci-après :
-- un premier mode 14a «ROUTE», utilisé par défaut, adaptée à une conduite classique sur route ;
-- un deuxième mode 14b «NEIGE» utilisé de préférence pour une conduite sur neige ;
-- un troisième mode 14c «BOUE» utilisé de préférence pour une conduite sur tous chemins, et en particulier les chemins de terre ;
-- un quatrième mode 14d «SABLE» utiliser de préférence pour une conduite sur sable ; et
-- un cinquième mode 14^{e} «ESP OFF» dans lequel le système d'antipatinage est désactivé.

Ainsi, de la même manière que pour le premier mode, des indicateurs lumineux 15 sont associés à chacun des modes activables 14a à 14e. Ces indicateurs lumineux 15 présentent trois états. Un premier état indiquant que la fonction ou le mode correspondant est activé. Un deuxième état indiquant que la fonction ou le mode correspondant est désactivé et disponible. Enfin un troisième état indiquant que la fonction ou le mode correspondant est désactivé et indisponible. De cette manière l'utilisateur peut agir sur la partie annulaire rotative 13 autour de la partie centrale fixe 12 pour changer de mode tout en étant informé des modes disponibles et non disponibles ainsi que du mode actif par le jeu de couleur des différents indicateurs lumineux.

Selon un autre aspect, l'invention concerne un procédé d'actionnement d'une molette de commande selon l'un des modes de réalisation sus présentés. Selon ce procédé, l'indicateur lumineux de la fonction active est dans le premier état, tandis que les indicateurs lumineux des fonctions désactivées sont dans le deuxième état pour les fonctions disponibles et dans le troisième état pour les fonctions indisponibles.

Selon un autre aspect de la présente invention, il est également prévu qu'une molette de commande (telle que présentée aux figures 1a et 1b) de plusieurs modes de fonctionnement utilisant la machine électrique et/ou la machine thermique d'un véhicule automobile équipé d'un groupe motopropulseur hybride, permette de clairement informer l'utilisateur du véhicule concernant la disponibilité du mode de fonctionnement actif. Il peut être également souhaitable d'informer l'utilisateur sur les indisponibilités éventuelles des autres modes inactifs.

Pour cela l'indicateur lumineux correspondant au mode de fonctionnement activé est allumé dans un premier état (par ex. de couleur verte) pour indiquer que ce mode est actif. En outre, la molette comprend des moyens d'alerte pour prévenir en cas d'indisponibilité du mode de fonctionnement actif en cours de roulage, ces moyens d'alerte étant mis en oeuvre par le passage dans un deuxième état de l'indicateur lumineux correspondant au mode actif pendant une période de temps prédéterminée. Ce deuxième état est par exemple réalisé par le clignotement (allumage et extinction successifs) de l'indicateur lumineux correspondant au mode de fonctionnement actif devenu indisponible pendant une période de temps prédéterminée. Alternativement, dans le cas où les indicateurs lumineux comprennent deux diodes électroluminescentes, ce deuxième état peut être réalisé par l'allumage et l'extinction successifs de l'une puis de l'autre des diodes. Après cette période de temps, l'indicateur visuel du mode indisponible est placé dans un troisième état indiquant qu'il n'est plus actif tandis qu'un autre mode de fonctionnement est activé (par défaut le système pourra passer dans le mode AUTO). Ce troisième état peut correspondre soit à l'extinction de l'indicateur visuel, soit à l'allumage dans une autre couleur (par ex. orange).

Une telle molette de commande permet d'avertir simplement l'utilisateur que le mode actif n'est plus disponible tout en lui indiquant le nouveau mode activé. On remarquera tout particulièrement l'idée astucieuse d'utiliser l'indicateur lumineux correspondant au mode de fonctionnement actif pour avertir l'utilisateur que ce mode n'est plus disponible. En effet ainsi, un indicateur lumineux réalise deux fonctions différentes, une première fonction consistant à indiquer à l'utilisateur si le mode correspondant est actif ou non et une deuxième fonction consistant à alerter l'utilisateur lorsque le mode actif devient indisponible.

Selon une variante de réalisation, il pourra être prévu des moyens d'émission d'un message indiquant l'indisponibilité du mode de fonctionnement actif. Ce message est de préférence transmis à l'utilisateur sous la forme d'un affichage de l'information souhaitée sur un écran du véhicule.

Selon une autre variante avantageuse de réalisation, il pourra être prévu en outre des moyens d'alerte sonore utilisés pour indiquer une impossibilité de continuer dans le mode de fonctionnement actif en raison d'une défaillance du groupe motopropulseur hybride. L'utilisation de tels moyens d'alerte sonore permet à l'utilisateur de distinguer un changement de mode en raison des conditions d'utilisation du véhicule, d'un changement de mode en raison d'une défaillance du groupe motopropulseur hybride.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées. En particulier, la molette présentée aux figures 1 à 3 a été décrite avec une partie intérieure fixe et une partie extérieure mobile, on comprendra néanmoins qu'il est envisageable de réaliser une molette avec une partie intérieure rotative et une partie extérieure fixe supportant les indications de fonction et les indicateurs lumineux.

## Revendications

1. Molette de commande (1 ; 11) pour véhicule automobile comprenant une première partie fixe (2 ; 12) sur laquelle sont disposées des indicateurs de fonction (4 ; 14) en correspondance desquels sont prévus au moins autant d'indicateurs lumineux (5 ; 15), les indicateurs de fonction et les indicateurs lumineux appartenant à la première partie fixe de la molette de commande, et une deuxième partie sans indicateur (3 ; 13) mobile par rapport à la première partie pour commander l'activation desdites fonctions, **caractérisée en ce que** chacun des indicateurs lumineux comprend un premier état indiquant que la fonction correspondante est activée, un deuxième état indiquant que la fonction correspondante est désactivée et disponible, et un troisième état indiquant que la fonction correspondante est désactivée et indisponible.

2. Molette de commande (1 ; 11) selon la revendication 1, **caractérisée en ce que** la deuxième partie (3 ; 13) est mobile en rotation par rapport à la première partie (2 ; 12).

3. Molette de commande (1 ; 11) selon la revendication 1 ou 2, **caractérisée en ce que** dans un premier mode de fonctionnement dit « manuel », l'indication de disponibilité fournie par le deuxième état indique que la fonction correspondante est possible, et l'indication de disponibilité fournie par le troisième état indique que la fonction correspondante est impossible.

4. Molette de commande (1 ; 11) selon l'une des revendications 1 à 3, **caractérisée en ce que** dans un deuxième mode de fonctionnement dit « assisté », l'indication de disponibilité fournie par le deuxième état indique que la fonction correspondante est conseillée et possible, et l'indication de disponibilité fournie par le troisième état indique que la fonction correspondante est déconseillée ou impossible.

5. Molette de commande (1 ; 11) selon l'une des revendications 1 à 4, **caractérisée en ce que** le premier état est indiqué au moyen d'une première couleur (5a), le deuxième état au moyen d'une deuxième couleur (5c, 5d) et le troisième état par l'absence d'illumination (5b) de l'indicateur lumineux correspondant.

6. Molette de commande (1 ; 11) selon l'une des revendications 1 à 5, **caractérisée en ce que** la première partie fixe (2 ; 12) est formée par un disque central (7 ; 17), et la deuxième partie rotative (3 ; 13) est formée par un anneau concentrique au disque central.

7. Molette de commande (1 ; 11) selon l'une des revendications 1 à 6, pour un véhicule automobile hybride comprenant un moteur électrique et un moteur thermique, **caractérisée en ce qu'**au moins deux indicateurs de fonction (4 ; 14) sont prévus sur la partie fixe de la molette (2 ; 12), un premier indicateur (AUTO) désignant un mode automatique dans lequel le véhicule gère automatiquement l'utilisation de l'un et/ou de l'autre des moteurs et un deuxième indicateur (ZEV) désignant un mode d'émission zéro dans lequel le véhicule utilise uniquement le moteur électrique.

8. Molette de commande (1 ; 11) selon la revendication 7, **caractérisée en ce que** quatre indicateurs de fonction sont prévus sur la partie fixe de la molette, un troisième indicateur (SPORT) désignant un mode sport dans lequel les deux moteurs sont utilisés de manière à fournir plus de couple pour déplacer le véhicule et un quatrième indicateur (4WD) désignant un mode quatre roues motrices dans lequel deux roues sont emmenées par le moteur thermique et les deux autres roues sont emmenées par le moniteur électrique.

9. Procédé d'actionnement d'une molette de commande selon l'une des revendications précédentes, **caractérisé en ce que** l'indicateur lumineux de la fonction active est dans le premier état, les indicateurs lumineux des fonctions désactivées sont dans le deuxième état pour les fonctions disponibles et dans le troisième état pour les fonctions indisponibles.

## Patentansprüche

1. Steuerrad (1; 11) für Kraftfahrzeug, das einen ersten stationären Teil (2; 12) aufweist, auf dem Funktionsanzeiger (4; 14) angeordnet sind, für die entsprechend mindestens ebenso viele Anzeigelampen (5; 15) vorgesehen sind, wobei die Funktionsanzeiger und die Anzeigelampen zu dem ersten stationären Teil des Steuerrads gehören, und einen zweiten Teil ohne Anzeiger (3; 13), der in Bezug zu dem ersten Teil beweglich ist, um das Betätigen der Funktionen zu steuern, **dadurch gekennzeichnet, dass** jede der Anzeigelampen einen ersten Zustand aufweist, der anzeigt, dass die entsprechende Funktion aktiviert ist, einen zweiten Zustand, der anzeigt, dass die entsprechende Funktion deaktiviert und verfügbar ist, und einen dritten Zustand, der anzeigt, dass die entsprechende Funktion deaktiviert und nicht verfügbar ist.

2. Steuerrad (1; 11) nach Anspruch 1, **dadurch gekennzeichnet, dass** der zweite Teil (3; 13) in Drehung in Bezug zu dem ersten Teil (2; 12) beweglich ist.

3. Steuerrad (1; 11) nach Anspruch 1 oder 2, **dadurch gekennzeichnet, dass** in einer ersten Betriebsart, die "manuell" genannt wird, die Verfügbarkeitsanzeige, die von dem zweiten Zustand gegeben wird, anzeigt, dass die entsprechende Funktion möglich ist, und die Verfügbarkeitsanzeige, die von dem dritten Zustand gegeben wird, anzeigt, dass die entsprechende Funktion unmöglich ist.

4. Steuerrad (1; 11) nach einem der Ansprüche 1 bis 3, **dadurch gekennzeichnet, dass** in einer zweiten Betriebsart, die "unterstützt" genannt wird, die Verfügbarkeitsanzeige, die von dem zweiten Zustand gegeben wird, anzeigt, dass die entsprechende Funktion empfohlen und möglich ist, und die Verfügbarkeitsanzeige, die von dem dritten Zustand gegeben wird, anzeigt, dass die entsprechende Funktion nicht empfohlen oder unmöglich ist.

5. Steuerrad (1; 11) nach einem der Ansprüche 1 bis 4, **dadurch gekennzeichnet, dass** der erste Zustand mittels einer ersten Farbe (5a) angezeigt wird, der zweite Zustand mittels einer zweiten Farbe (5c, 5d) und der dritte Zustand durch Fehlen des Leuchtens (5b) der entsprechenden Anzeigelampe angezeigt wird.

6. Steuerrad (1; 11) nach einem der Ansprüche 1 bis 5, **dadurch gekennzeichnet, dass** der erste stationäre Teil (2; 12) aus einer zentralen Scheibe (7; 17) ausgebildet ist, und der zweite drehende Teil (3; 13) durch einen Ring, der zu der zentralen Scheibe konzentrisch ist, ausgebildet ist.

7. Steuerrad (1; 11) nach einem der Ansprüche 1 bis 6, für ein Hybridfahrzeug, das einen Elektromotor und einen Verbrennungsmotor aufweist, **dadurch gekennzeichnet, dass** mindestens zwei Betriebsanzeiger (4; 14) auf dem stationären Teil des Steuerrads (2; 12) vorgesehen sind, ein erster Anzeiger (AUTO), der einen Automatikbetrieb bezeichnet, in dem das Fahrzeug den Gebrauch des einen und/oder des anderen der Motoren automatisch verwaltet, und ein zweiter Anzeiger (ZEV), der einen Betrieb mit null Emission anzeigt, bei dem das Fahrzeug nur den Elektromotor verwendet.

8. Steuerrad (1; 11) nach Anspruch 7, **dadurch gekennzeichnet, dass** vier Funktionsanzeiger auf dem stationären Teil des Steuerrads vorgesehen sind, wobei ein dritter Anzeiger (SPORT) einen Sportbetrieb bezeichnet, in dem die zwei Motoren derart verwendet werden, dass sie mehr Moment liefern, um das Fahrzeug zu fahren, und einen vierten Anzeiger (4WD), der einen Allradbetrieb anzeigt, in dem zwei Räder von dem Verbrennungsmotor angetrieben werden und die zwei anderen Räder von dem Elektromotor angetrieben werden.

9. Verfahren zum Betätigen eines Steuerrads nach einem der vorhergehenden Ansprüche, **dadurch gekennzeichnet, dass** die Anzeigelampe der aktiven Funktion in dem ersten Zustand ist, die Anzeigelampen der deaktivierten Funktionen in dem zweiten Zustand für die verfügbaren Funktionen und in dem dritten Zustand für die nicht verfügbaren Funktionen sind.

## Claims

1. Control knob (1; 11) for a motor vehicle, comprising a first, fixed portion (2; 12) on which function indicators (4; 14) are arranged, in correspondence with which at least as many indicator lights (5; 15) are provided, the function indicators and the indicator lights belonging to the first, fixed portion of the control knob, and a second, indicatorless portion (3; 13), which is movable in relation to the first portion, for controlling the activation of said functions, **characterised in that** each of the indicator lights has a first state indicating that the corresponding function is activated, a second state indicating that the corresponding function is deactivated and available, and a third state indicating that the corresponding function is deactivated and unavailable.

2. Control knob (1; 11) according to claim 1, **characterised in that** the second portion (3; 13) is rotatable in relation to the first portion (2; 12).

3. Control knob (1; 11) according to either claim 1 or claim 2, **characterised in that**, in a first, "manual" mode of operation, the availability indication provided by the second state indicates that the corresponding function is possible, and the availability indication provided by the third state indicates that the corresponding function is impossible.

4. Control knob (1; 11) according to any of claims 1 to 3, **characterised in that**, in a second, "assisted" mode of operation, the availability indication provided by the second state indicates that the corresponding function is advisable and possible, and the availability indication provided by the third state indicates that the corresponding function is inadvisable or impossible.

5. Control knob (1; 11) according to any of claims 1 to 4, **characterised in that** the first state is indicated by means of a first colour (5a), the second state by means of a second colour (5c, 5d) and the third state by the absence of illumination (5b) of the corresponding indicator light.

6. Control knob (1; 11) according to any of claims 1 to 5, **characterised in that** the first, fixed portion (2; 12) is formed by a central disc (7; 17), and the second, rotatable portion (3; 13) is formed by a ring which is concentric with the central disc.

7. Control knob (1; 11) according to any of claims 1 to 6, for a hybrid motor vehicle comprising an electric motor and a heat engine, **characterised in that** at least two function indicators (4; 14) are provided on the fixed portion of the knob (2; 12), a first indicator (AUTO) designating an automatic mode in which the vehicle automatically manages the use of one and/or the other of the electric motor and the heat engine, and a second indicator (ZEV) designating a zero-emission mode in which the vehicle uses only the electric motor.

8. Control knob (1; 11) according to claim 7, **characterised in that** four function indicators are provided on the fixed portion of the knob, a third indicator (SPORT) designating a sport mode in which both the electric motor and the heat engine are used so as to provide more torque for moving the vehicle, and a fourth indicator (4WD) designating a four-wheel-drive mode in which two wheels are driven by the thermal engine and the other two wheels are driven by the electric monitor.

9. Method for actuating a control knob according to any of the preceding claims, **characterised in that** the indicator light of the active function is in the first state, the indicator lights of the deactivated functions are in the second state for the available functions and in the third state for the unavailable functions.
